# EUROPÄISCHE PATENTSCHRIFT

(11) **EP 2 844 974 B1**
(45) Veröffentlichungstag und Bekanntmachung des Hinweises auf die Patenterteilung: **13.11.2019**
(21) Anmeldenummer: 13726668.0
(22) Anmeldetag: 05.03.2013
(51) Int. Cl.: G01N 21/95, G01N 21/94, G01N 21/84, G01N 21/31, G01N 21/64, G01M 5/00, G01M 11/08, F03D 17/00, G01J 3/433

(54) **VERFAHREN UND VORRICHTUNG ZUR ÜBERWACHUNG DES OBERFLÄCHENZUSTANDES VON BAUTEILEN**
METHOD AND DEVICE FOR MONITORING THE SURFACE STATE OF COMPONENTS
PROCÉDÉ ET DISPOSITIF DE SURVEILLANCE DE L'ÉTAT DE LA SURFACE D'ÉLÉMENTS STRUCTURAUX

(30) Priorität: 05.03.2012 DE 102012203455
(43) Veröffentlichungstag der Anmeldung: 11.03.2015
(73) Patentinhaber: Igus Ingenieurgemeinschaft Umweltschutz Mess- und Verfahrenstechnik GmbH, 01099 Dresden (DE)
(72) Erfinder: VOLKMER, Peter, 01109 Dresden (DE)
(74) Vertreter: Gottfried, Hans-Peter
(86) Internationale Anmeldenummer: PCT/DE2013/100083
(87) Internationale Veröffentlichungsnummer: WO 2013/131516

(56) Entgegenhaltungen:
- WO-A2-2011/009459
- US-A1- 2005 135 546
- US-A1- 2011 090 110

## Beschreibung

Die Erfindung betrifft ein Verfahren und eine Vorrichtung zur Überwachung des Oberflächenzustandes von Bauteilen, deren Oberfläche eine oder mehrere übereinander liegende Schichten umfasst, wobei eine Aufnahme des Oberflächenzustandes des gesamten Bauteils oder zumindest eines Abschnitts davon erstellt und anhand dieser Aufnahme der Oberflächenzustand beurteilt wird.

Dabei geht es darum Schädigungszustände von in Nutzung befindlichen Oberflächen festzustellen und Vorgaben für die Instandhaltung zu ermitteln.

Weiterhin ist eine Anwendung auch zur Qualitätssicherung bei der Produktion von beschichteten Teilen, um insgesamt festzustellen, dass Vorgaben der Schichtdicken eingehalten werden. Bisher gibt es keine flächige, sondern nur punktuelle Messmethoden, diese erfüllen die Forderungen der Qualitätssicherung nur ungenügend.

Häufig bestehen die Oberflächen von Bauteilen aus einer oder mehr Schichten zum Teil unterschiedlicher Materialien mit unterschiedlichen Funktionen, beispielsweise als mehrlagige äußere Schale des Bauteils oder auch als Schutzschicht. Die Stabilität und die Funktion der Oberflächen lässt in Abhängigkeit von Anwendungsfall keine oder nur geringe Beschädigungen oder Alterungserscheinungen einer oder mehrerer Schichten der Oberfläche zu, so dass sie regelmäßig inspiziert werden muss, um möglichst noch vor einer irreversiblen Schädigung geeignete Wartungsmaßnahmen ergreifen zu können.

Die Überwachung des Oberflächenzustandes solcher Bauteile wird in vielen technischen Gebieten benötigt, z.B. wo mobile oder stationäre Vorrichtungen aus mehrschichtigen Leichtbaumaterialien verwendet werden, wie bei Flugzeugrümpfen, Schiffsrümpfen, Fahrzeugkarossen oder ähnlichem.

Von Interesse ist auch die Verschmutzung der Oberfläche durch Staubbeladung oder z. B. durch Insekten bei bewegten Körpern. Diese Verschmutzungen können aerodynamische Rauhigkeiten hervorrufen, die die Funktionalität der Oberflächen stören können. Daher ist die Kenntnis deren Verbreitung auf den Flächen oder an bestimmten Stellen und deren Stärke von Interesse.

Insbesondere für Windkraftanlagen ist die Überwachung des Oberflächenzustandes von Bedeutung.

Windkraftanlagen werden größtenteils an sehr exponierten Lagen, wie Bergkämmen oder in der offenen See vor Küsten, installiert, um möglichst dauerhafte und mit konstanter stärke wehende Winde ausnutzen zu können. Dabei kommt es allerdings auch immer wieder zu unsteten Windverhältnissen in Form von Böen, die zu einer Überlastung der Rotorstruktur und damit zu Schäden an den Tragstrukturen und/oder den Oberflächen, z.B. zu Rissen führen können. Die Wechselwirkung der Strömungskräfte des anströmenden Windes und den hervorgerufenen Rückstellkräften der Rotorblätter führen z.T. zu hohen dynamischen Belastungen die u.U. durch mechanische Ermüdung ebenfalls zu Schäden der Rotorstruktur führen.

Ein Rotorblatt besteht derzeit meist aus einem glasfaserverstärktem Kunststoff als tragenden und aerodynamischen Körper. Darüber liegt ein Gelcoat, das als glättende Zwischenschicht fungiert, und darüber eine abdeckende feuchtigkeitsabweisenden Lackschicht. Je früher hier bereits in den obersten Schichten Schäden erkannt werden, umso einfacher und kostengünstiger können sich die erforderlichen Wartungs- oder Instandhaltungsmaßnahmen gestalten. Deshalb sind Verfahren und Vorrichtungen notwendig die insbesondere zu einer objektiven, effizienten und kostengünstigen Überwachung des Oberflächenzustandes von Rotorblättern an Windkraftanlagen eingesetzt werden können.

Das vorwiegend eingesetzte Verfahren besteht dabei aus den Verfahrensschritten des manuellen Abseilens eines Inspektionsteams an einem senkrecht stehenden Rotorblatt eines stillstehenden Windrades. Dabei wird das Rotorblatt einer visuellen und nachteilig subjektiven Begutachtung hinsichtlich Schädigungen in Form einer fehlenden Lackschicht, eines fehlenden Gelcoats oder veränderten Harzes des Glasfaserverstärkten Kunststoffs unterzogen. Nachteilig sind dabei vor allem die entstehenden Ertragsausfälle durch Stillstandzeiten des Windrades, durch den enormen Zeitaufwand der Inspektion, der subjektive Charakter der Begutachtung sowie die Gefahr für Leib und Leben des Inspektionsteams, welche durch die manuelle Begehung des Rotorblattes entsteht.

US 2011/0205348 A1 offenbart eine Abwandlung dieses Verfahrens, wobei die manuelle Begehung des Rotorblattes durch eine Fotokameras umfassende Vorrichtung ersetzt wird, welche maschinell entlang des stillstehenden Rotorblattes bewegt werden kann. Es bleibt der Verfahrensnachteil der rein visuellen Inspektion mit subjektiver Bewertung von Schädigungen der Rotorblattoberfläche, so dass erst Schädigungen eines bestimmten Ausmaßes feststellbar sind, und eine zu erwartende lange Stillstandzeit des Windrades.

In DE 10 2010 048400 A1 wird ein Verfahren vorgeschlagen, welches eine Überprüfung des baulichen Zustandes von Rotorblättern von Windrädern erlaubt, indem, von einem beliebigen mobilen Standort aus, Aufnahmen mit einer Vielzahl von Aufnahmeeinheiten, wie z.B. Kameras, Radar-, Infrarot-, Ultraschall- und/oder Lasergeräte, durchgeführt und ausgewertet werden. Auch der Einsatz von Terahertz-Wellen wird vorgeschlagen, wobei deren beschränkte Anwendbarkeit einem Einsatz nachteilig entgegensteht. Auch die Verwendung einer Wärmebildkamera wird in Verbindung mit geeigneten Auswerteeinheiten vorgeschlagen um Ungleichmäßigkeiten in der tragenden Struktur, an der z.B. Risse entstehen, detektieren zu können.

US 2005/0135546, US 2011/0090110 und WO 2011/009459 offenbaren andere Verfahren zur Überwachung des Oberflächenzustandes von Bauteilen.

Somit liegt der Erfindung die Aufgabenstellung zugrunde, ein Verfahren und eine Vorrichtung zur Überwachung des Oberflächenzustandes von Bauteilen darzustellen, deren Oberfläche mehrere Schichten umfasst, mit denen äußere Schäden unterschiedlicher Ausprägung örtliche differenziert erkannt werden können.

Zur Lösung der Aufgabe wird ein Verfahren vorgeschlagen, welches die Merkmale gemäß Anspruch 1 und durch eine für die Durchführung des Verfahrens geeignete Vorrichtung, welche die Merkmale gemäß Anspruch 6 aufweist. In den abhängigen Patentansprüchen sind vorteilhafte Ausgestaltungen und Weiterbildungen beschrieben.

Das erfindungsgemäße Verfahren ermöglicht die Überwachung des Oberflächenzustandes von Bauteilen, deren Oberfläche aus einer oder mehreren Schichten gebildet ist. Derartige Bauteile können in ihrer tragenden Konstruktion aus verschiedenen Materialien, z.B. Kunststoff oder Metallen bestehen und mit einer oder mehreren Schichten überzogen sein.. Zur Überwachung des Zustandes der Oberfläche wird diese vollständig oder abschnittsweise, breit- oder schmalbandig mit elektromagnetischer Strahlung mittels einer Beleuchtungseinheit beleuchtet, die von der Oberfläche reflektierte elektromagnetische Strahlung mit einer Aufnahmeeinheit erfasst und eine frequenzselektive Auswertung der erfassten Aufnahme so durchgeführt, dass anhand des frequenzabhängigen Absorptionsverhaltens oder Fluoreszenzverhaltens zumindest einer Schicht der Oberfläche eines Bauteils eine Schädigung ermittelbar ist.

Die Form der mit diesem Verfahren zu detektierenden Schädigung oder Veränderungen kann vielerlei Gestalt haben. Aufgrund unterschiedlicher, auch gleichzeitig oder wechselnd auftretender Belastung und mitunter bereits vorhandener Risse in der Materialoberfläche, von Poren oder einer vorhandenen Oberflächenzerstörung in Kombination mit anderen wechselnden mechanischen, thermischen Lasten führen zu Materialermüdung. Diese kann gegebenenfalls durch einwirkende Umwelteinflüsse wie die UV-Strahlung der Sonne, einwirkender Feuchtigkeit durch Regen oder korrosive Medien, wie z.B. salzhaltiges Spritzwasser noch beschleunigt werden. Neben Materialermüdung können auch Einzelereignisse zu Schäden der Oberfläche der Bauteile führen. Das Verfahren gestattet es zudem, Verschmutzungen zu detektieren, indem die besonderen Eigenschaften dieser zusätzlichen oberflächlichen Ablagerungen bei der Analyse im Verfahren berücksichtigt werden.

Je nach Art der Schädigung können nur die oberste oder auch darunter liegende Schichten erfasst sein. Das erfindungsgemäße Verfahren gestattet es, die Schädigung sowohl hinsichtlich der Lage als auch der Schicht zuzuordnen.

Zudem ist es möglich, die Überwachung sowohl im laufenden Betrieb als auch in Stillstandszeiten vorzunehmen, wobei Ersteres die laufende Überwachung und vorbeugende Instandhaltung unterstützt.

Die aktive Beleuchtung in Verbindung mit der Verwendung von schmal- oder breitbandiger Strahlung gestattet es, dass gezielt unterschiedliche Schädigungen mit einem Verfahrensdurchlauf detektiert, Materialänderungen verfolgt oder andere spezifische Aufgabenstellungen zur Erkennung der Oberflächen des Bauteils mit dem erfindungsgemäßen Verfahren gelöst werden können. Mit Art und Gestaltung der Beleuchtung kann das Verfahren gezielt an das Bauteil angepasst werden, insbesondere hinsichtlich des Materials, der zu erwartenden Veränderung oder Schädigung und der Umgebungsbedingungen vor Ort, bei einer Überwachung während des Einsatzes.

Dabei ist es selbstverständlich, dass die Frequenzabhängigkeit der Aufnahmeeinheit der Beleuchtung entsprechend angepasst ist.

Die Absorption hat ihre grundlegende Ursache in Translations- und Rotationsschwingungen von Atomen in Molekülen des betrachteten Stoffes. Diese Schwingungen sind molekülspezifisch und hängen von der Bindungsstärke der Atome im Molekül ab. Die Absorptionsfrequenzen haben daher im Wesentlichen stabile Werte, die von der Temperatur in den Grenzen der anzutreffenden Umgebungsbedingungen auch durch Erwärmung der Sonnenstrahlung kaum beeinflusst werden. Auch die Druckabhängigkeit der Absorptionsfrequenzen ist im Bereich der anzutreffenden Umgebungsdrücke kaum feststellbar. Die Absorptionsspektren eigenen sich daher gut für die Identifikation von Stoffen, da jeder Stoff eine Art spezifischen "Fingerabdruck" von Absorptionsfrequenzen aufweist. Ein Referenz-Absorptionsspektrum bezeichnet dabei ein stoffspezifisches Absorptionsspektrum von einem in Bauteilen der betreffenden Windkraftanlage verwendeten Schichtmaterial.

Wird in einer alternativen Ausführungsform der Erfindung anstelle des stoffspezifischen Absorptionsverhaltens das stoffspezifische Fluoreszenzverhalten genutzt, so können die beschriebenen Vorteile in gleicher Weise genutzt werden.

Wird das stoffspezifische Fluoreszenzverhalten zur Ermittlung einer Schädigung der Schicht bzw. Schichten der Oberfläche der Bauteile genutzt, so ist es erforderlich, dass die Materialien zumindest jener Schicht oder Schichten, die untersucht werden sollen, das entsprechende Fluoreszenzverhalten aufweisen. Gegebenenfalls kann schon während deren Herstellung das entsprechende Verhalten eingestellt werden, z.B. indem den differenzierten Schichten der Oberfläche fluoreszierende Stoffe beigemischt werden.

Für Windkraftanlagen sind die beschriebenen Eigenschaften des Verfahrens von Vorteil, da sie auf Grund ihres Einsatzes als regenerative Energiequellen und der damit verbundenen meist exponierten, oft windreichen Lage, wie z.B. auf See in küstennahen Gebieten oder Hügelketten, zur Erzeugung von Elektroenergie stark abhängig von Umwelteinflüssen sind, welche einerseits durch sich ändernde Windverhältnisse zu einem ungleichmäßigen Betrieb der Anlage und damit zu mechanischen Wechselbelastungen, aber auch durch die sonstigen meteorologischen Belastungen wie Regen, Hagel, Schnee und salzhaltige Aerosole bei Offshore-Anlagen zum Verschleiß der Oberfläche der Bauteile führen können.

Des Weiteren kommt es infolge ihres Strömungswiderstandes zu einer wechselnden Biegebelastung der Rotorblätter, welche durch böigen Wind auch zu schädigenden Einzelereignissen führen kann. Zu schädigenden Einzelereignissen zählen auch Schäden durch Fremdobjekte, welche in Form von Hagel, Vögeln oder anderen Objekten auftreten können. Auf Grund der hohen Relativgeschwindigkeit zwischen den Rotorblättern und den Fremdobjekten, können selbst kleine Fremdobjekte zu immensen Schäden der Schale der Rotorblätter führen. Diese Schäden können sich auf Grund der oben beschriebenen schichtweisen Bauweise differenziert darstellen; in Form von zumindest stückweise fehlenden Lackschichten, zumindest stückweise fehlendem Gelcoat bei fehlender Lackschicht und Veränderungen der Grundstruktur des glas- oder kohlenstoffverstärkten Kunststoffs bei fehlender Lackschicht und fehlendem Gelcoat. Ist die Oberfläche aus weiteren Schichten oder anderen Materialen aufgebaut, können Schäden an diesen auch differenziert werden.

Neben Bauteilen wie dem Turm der Windkraftanlage, der Gondel mit Welle, einer daran angebrachten Nabe sind es derzeitig insbesondere die an der Nabe angebrachten Rotorblätter von Windkraftanlagen die größtenteils in Schichtenbauweise hergestellt werden, wobei deren Grundstruktur einen glasfaserverstärkten Kunststoff aufweist, dessen Hauptbestandteil ein Polyester- oder Epoxidharz sein kann. Andere Ausgestaltungen von Rotorblättern weisen als Grundkörper einen kohlefaserverstärkten Kunststoff auf. Über einen darüber aufgebrachten, ebenfalls organischen Gelcoat wird eine schützende Lackschicht aufgetragen. Andere Ausbildungen der Oberfläche können jedoch auch mit mehr als drei Schichten ausgestattet sein.

Die Beleuchtung und die Aufnahme der reflektierten elektromagnetischen Strahlung eines Rotorblattes als Bauteil einer Windkraftanlage kann die Saug- und Druckseite des Rotorblattes und auch dessen Anströmkante umfassen. Dabei kann die Beleuchtung und Aufnahme dieser Bauteile des Rotorblattes gleichzeitig unter Verwendung mehrerer Beleuchtungs- und Aufnahmeeinheiten oder zeitlich versetzt mit einer oder mehrerer Beleuchtungs- und Aufnahmeeinheiten erfolgen. Die Windkraftanlage muss sich dazu nicht im Stillstand befinden. Die Frequenzbereiche der Beleuchtungs- und Aufnahmeeinheit werden abhängig davon, ob es sich um eine schmal- oder breitbandige Aufnahme handelt aufeinander abgestimmt.

Erfindungsgemäß kann somit die Verfügbarkeit von Windkraftanlagen drastisch verbessert werden, da die Effektivität der Überwachung des Oberflächenzustandes von Bauteilen von Windkraftanlagen derart erhöht wird, dass sich der Zeitaufwand für eine Inspektion verkürzt, die Anzahl der Inspektion dafür aber erhöht. Des Weiteren kann die Überwachung als Online-Überwachung ausgeführt sein, so dass eine unterbrechungsfreie Zustandsüberwachung möglich ist. Aus Sicht des Betreibers der Windkraftanlage entsteht erfindungsgemäß auch der Vorteil, dass die Windkraftanlage stets am Strommarkt zur Verfügung steht und dadurch keine direkten Umsatzeinbußen durch Stillstandzeiten entstehen.

Sofern in der Beschreibung der Erfindung auf Windkraftanlagen Bezug genommen wird, kann das in analoger Weise auch auf andere Bauteile angewendet werden, deren äußere Oberfläche einen vergleichbaren ein- oder mehrschichtigen Aufbau aufweisen.

Es hat sich als vorteilhaft erwiesen, wenn für die Vorrichtung zur Überwachung des Oberflächenzustandes von Bauteilen zum Zwecke einer Schichtdickenmessung wenigstens ein mobiles Scannsystem vorgesehen und dieses so ausgeführt ist, dass es die Oberfläche mit dem optischen System abscannt, zugleich einen konstanten Abstand des optischen Systems zu dem Bauteil sichert und die Aufnahme von Messwerten stets in Richtung der jeweiligen Flächennormale des Bauteils erfolgt.

Besondere Vorteile resultieren aus der Verwendung einer Vorrichtung zur Überwachung des Oberflächenzustandes von Bauteilen zur Messung an Rotorblättern oder Bauteilen, deren Oberfläche eine oder mehrere übereinander liegende Schichten umfasst, wenn die Messung während oder unmittelbar nach der Fertigung erfolgt, Dies ist beispielsweise für die Qualitätssicherungsmessungen an produzierten Rotorblättern oder anderen größeren flächigen Bauteilen, bei denen vor allem die Schichtdicke absolut gemessen werden soll, der Fall. Hierbei werden mobile Scannsysteme zum Einsatz kommen. Sie scannen die Oberflächen mit dem optischen System ab und sichern dabei auch, dass die optischen Systeme zum Objekt einen konstanten Abstand einhalten und die Aufnahme ständig in Richtung der jeweiligen Flächennormale erfolgt.

Die Durchführung der frequenzselektiven Auswertung hinsichtlich einer Schädigung sieht dabei die Verwendung stoffspezifischer Referenz-Absorptionsspektren vor. Solche Absorptionsspektren liegen für den Großteil von Verbindungen, insbesondere auch der für Windkraftanlagen verwendeten organischen Verbindungen, bereits vor und werden in Laboren zur Stoffanalyse mittels Spektroskopie, insbesondere der Infrarotspektroskopie zur Identifikation von Stoffen, angewandt.

Hinsichtlich der Auswertung werden entweder breitbandige Aufnahmen durch geeignete bildverarbeitende Verfahren zerlegt, so dass der Inhalt der einzelnen zerlegten Aufnahmen bezüglich ihres enthaltenen Frequenzbereiches denen der stoffspezifischen Referenz-Absorptionsspektren einzelner Schichten der Oberfläche des Bauteils entspricht. Oder es werden bereits schmalbandige Aufnahmen im Frequenzberiech stoffspezifischer Referenz-Absorptionsspektren einzelner Schichten der Oberfläche des Bauteils erfasst.

Aus diesen frequenzselektiven Aufnahmen, die sich z.B. bei einer schmalbandigen Aufnahme im Bereich einer Absorptionsbande eines der Schichtmaterialien im Sinne einer schwarz-weiß Aufnahme darstellen lassen, können dann durch geeignete Methoden der Mustererkennung oder auch durch eine manuelle Begutachtung der Aufnahme Rückschlüsse auf die Quelle der Schädigung hinsichtlich deren Position und/ oder Schicht gezogen werden. Schwarze Bereiche der Darstellung im Sinne einer Schwarz-Weiß-Aufnahme stellen dabei Bereiche einer Absorption in diesem selektierten Frequenzbereich dar, während weiße Bereiche der Darstellung den Großteil des selektierten Frequenzbereichs reflektieren zu scheinen. Bei breitbandigen Aufnahmen hingegen werden die aufgenommenen Absorptionsspektren nach der oder den Absorptionsbanden der Materialien der Schichten durchsucht.

Für die oben beschriebene beispielhafte Anwendung des Verfahrens für die Überwachung des Oberflächenzustandes von Rotorblättern mit einen Aufbau aus drei Schichten würde ein weißer Bildbereich an Stellen des Rotors in der frequenzselektiven Aufnahme für den Lack auf einen Schaden der Lackschicht hindeuten, da in diesem weißen Bildbereich gerade die Absorptionsfrequenzen des Lacks nicht absorbiert werden. Sollte an Stellen mit defektem Lack ebenfalls der Gelcoat beschädigt sein, so sind auf frequenzselektiven Aufnahmen für den Gelcoat diese Stellen ebenfalls weiß, da dort die Absorptionsfrequenzen des Gelcoat nicht absorbiert werden. Für den Fall, dass an Stellen mit einer fehlenden Lackschicht und einer fehlenden Gelcoatschicht der Grundkörper ebenfalls beschädigt sein, so sind auf frequenzselektiven Aufnahmen für den Grundkörper diese Stellen ebenfalls weiß. Bei einem anderen Schichtaufbau der Oberfläche sind Defekte in den übereinanderliegenden Materialien in gleicher Weise anhand deren unterschiedlichen Absorptionsverhaltens festzustellen.

Wird in einer anderen Ausführungsform der Erfindung anstelle des stoffspezifischen Absorptionsverhaltens das stoffspezifische Fluoreszenzverhalten genutzt, so kann die Auswertung in gleicher Weise erfolgen, wie sie in der oben beschriebenen Ausführungsform als Oberfläche mit einem Aufbau für drei Schichten dargelegt wird, jedoch mit dem Unterschied, dass die Schädigungen im Sinne einer schwarz-weiß Aufnahme als dunklere Stellen erkennbar sind.

Wird das stoffspezifische Fluoreszenzverhalten zur Ermittlung einer Schädigung der Schichten der Oberfläche der Bauteile genutzt, so ist schon während deren Herstellung darauf zu achten, dass den differenzierten Schichten der Oberfläche der Bauteile fluoreszierende Stoffe beigemischt werden müssen.

Dementsprechend kann eine Auswertung der Schädigung sowohl hinsichtlich ihrer Position als auch der betreffenden Schicht des Bauteils der Windkraftanlage erfolgen.

Sollten die verwendeten Schichtmaterialen der Oberfläche des zu untersuchenden Bauteils unbekannt sein, so dass die zu verwendenden Referenz-Absorptionsspektren ebenfalls nicht bekannt sind, so wird ein Frequenzscan in einem vordefinierten schmal- oder breitbandigen Frequenzbereich durchgeführt und die Ergebnisse hinsichtlich darin enthaltender bekannter Referenz-Absorptionsspektren verglichen, um die Quelle der Schädigung in Bezug auf deren Position und/ oder Schicht der Oberfläche zu lokalisieren.

Der Frequenzscan kann entweder zum Zeitpunkt der Aufnahme, wobei eine Vielzahl von schmalbandigen Einzelaufnahmen erfasst wird, oder durch schmalbandiges Zerlegen einer breitbandigen Aufnahme während der Auswertung erfolgen. In diesen schmalbandigen Aufnahmen wird dann durch geeignete Methoden in Frequenzbereichen von bekannten Referenz-Absorptionsspektren typischer Schichtmaterialen der Oberflächenschichten des Bauteils nach Schädigungen gesucht. Die Vorgehensweise zur Lokalisierung der Schädigung entspricht dabei derjenigen die auch eingesetzt wird, wenn die dafür zu verwendenden Frequenzbereiche durch die Referenz-Absorptionsspektren bekannter Schichtmaterialen schon eingeschränkt werden können.

Eine Schmutzschicht wird in der gleichen Weise darstellbar, oder dadurch, dass das erwartete Absorptionsverhalten der bekannten Stoffe der Oberflächenschichten zumindest abschnittsweise nicht mehr detektierbar ist, da eine Zusatzschicht zumindest stellenweise auf der Oberfläche des Rotorblatts entstanden ist.

Neben der Bestimmung von Schädigungen der Bauteile ist es mittels der erfassten Aufnahmen der reflektierten elektromagnetischen Strahlung ebenfalls möglich die relative Dickenverteilung einer betrachteten Schicht zu ermitteln. Aus einer frequenzselektiven Aufnahmen eines Schichtmaterials, die sich z.B. im Sinne einer schwarz-weiß Aufnahme darstellen lässt, kann dann durch geeignete Methoden, beispielsweise durch Verwendung von Korrelationsmethoden, die Intensitätsverteilung der Aufnahme als Dickenverteilung dieser betrachteten Schicht interpretiert werden. Aus der Intensitätsverteilung der Aufnahme können auch diskrete Werte der Dicke der einen oder mehr dargestellten Schicht ermittelt werden.

Um die absolute Dickenverteilung dieser Schicht zu bestimmen kann die eben erwähnte Methode zur Korrelation von Intensität und Dicke der betrachteten Schicht dahingehend angepasst werden, dass zumindest für einem Intensitätswert der Aufnahme eine Dicke der betrachteten Schicht bekannt ist. Aus bekannten Referenzdaten oder einer geeigneten Kalibrierung, die einen Zusammenhang zwischen einer Änderung der Intensität der reflektierten Strahlung und der damit verbundenen Änderung der Dicke der betrachteten Schicht darstellen, kann so die absolute Dickenverteilung für Aufnahme der betrachteten Schicht ermittelt werden. Dadurch wird es möglich auch Aussagen zur Güte von Schichten treffen zu können, ohne das es schon zu Abplatzungen einzelner Schichten gekommen ist.

Durch mechanische, thermische oder auch korrosive Belastungen verändert jeder Werkstoff seine Eigenschaften, dies wird weithin als Alterung bezeichnet. Damit direkt verbunden ist auch die Verschiebung von typischen Absorptionslinien der Spektren eines Schichtmaterials hin zu anderen, veränderten Frequenzen. Dies ist entweder für die Auswahl des schmalbandigen Frequenzbereiches während der Erfassung oder Auswertung der erwähnten Aufnahmen oder für die Referenz-Absorptionsspektren, denen sonst nur neuwertige Schichtmaterialien zugrunde liegen, zu berücksichtigen. Die Differenz der Absorptionsminima innerhalb der Absorptionsspektren auf Grund von Alterung kann somit auch dazu benutzt werden, um Aussagen hinsichtlich des Grades der Alterung in Bezug auf den neuwertigen Zustand des Schichtmaterials treffen zu können. Demzufolge sind mit dem erfindungsgemäßen Verfahren sowohl Aussagen zu Oberflächenschäden, wie sie in Form von Abplatzungen auftreten können, als auch zu gefügeverändernden Effekten, wie sie in Form von Alterung vorhanden sein können, getroffen werden.

Bei der Durchführung des Verfahrens ist die Beleuchtung und dazu die verwendete Beleuchtungseinheit der Art ausgeführt, dass der Einfluss einer Fremdbelichtung, wie sie beispielsweise in Form von infrarotem oder ultraviolettem Licht der Sonne entstehen kann, soweit minimiert oder wenn möglich ausgeschlossen wird, dass sie für die Überwachung keine Relevanz mehr hat. Außerdem kann die Beleuchtungseinheit so ausgeführt sein, dass deren Abstand zu der zumindest teilweise zu erfassenden Windkraftanlage, beispielsweise durch Änderung der Intensität der Beleuchtungseinheit, nahezu frei eingestellt werden kann.

Mittels der Position der Beleuchtungs- und der Aufnahmeeinheit ist, in Abhängigkeit von der Gestalt des Bauteils, die mit einem Beleuchtungsvorgang und einer Aufnahme zu erfassende Oberfläche einstellbar.

Sofern die Überwachung entsprechend einer weiteren Ausgestaltung eine Windkraftanlage betrifft, kann ergänzend auch die Pitchwinkeleinstellung angepasst werden, um die gleichzeitig aufzunehmenden Oberflächenbereiche zu optimieren.

Der Pitchwinkel bezeichnet hierbei den tatsächlichen Anstellwinkel des Rotorblattes gegenüber dem Anstellwinkel des Rotorblattes in Ruhe- bzw. Fahnenstellung, d.h. also längs der Rotorachse.

Sollte die Erfassung der Druckseite, Saugseite oder der Anströmkante eines Rotorblattes mittels Aufnahmeeinheit vom Boden aus und/oder während des Betriebes der Windkraftanlage erfolgen, so wird der Pitchwinkel der Rotorblätter in der Art beeinflusst, dass die Hauptnormalenvektoren der zu erfassenden Oberflächen von Druckseite, Saugseite oder der Anströmkante jeweils senkrecht zu den flächigen Bildsensoren der Aufnahmeeinheiten ausgerichtet sind.

So kann das Rotorblatt bei einer Einstellung des Pitchwinkels auf beispielweise phi = 10° aus drei Positionen für Aufnahme- und Beleuchtungseinheit vollständig erfasst werden, wobei die Aufnahme gleichzeitig durch Verwendung von drei Aufnahme- und Beleuchtungseinheiten oder zeitlich versetzt mit einer Aufnahme- und Beleuchtungseinheit durchgeführt werden. Der Betrag des Pitchwinkels phi und der Abstand von Aufnahme- und Beleuchtungseinheit zur Rotorblattebene der Windkraftanlage stehen dabei in einem direkten Zusammenhang. Eine Änderung des Pitchwinkels der Rotorblätter der Windkraftanlage bedeutet auch gleichzeitig eine mehr oder weniger große Änderung des Abstandes der Aufnahme- und Beleuchtungseinheit von der Rotorblattebene. Je nachdem in welchem Betriebspunkt sich die Windkraftanlage befindet ist darüber zu entscheiden inwieweit der Pitchwinkel für die Zeitdauer der Aufnahme geändert werden muss, damit die Position der Aufnahme- und Beleuchtungseinheit den gegebenen topografischen Eigenschaften der Umgebung der Windkraftanlage angepasst werden kann.

Die erfindungsgemäße Vorrichtung zur Durchführung des Verfahrens zur Überwachung des Oberflächenzustandes von Bauteilen, deren Oberfläche mehrere Schichten umfasst, besteht aus zumindest einer digitalen Aufnahmeeinheit zum Erfassen elektromagnetischer Strahlung im sichtbaren und/oder im Infrarot-Bereich, d.h. in einem Wellenlängenbereich von 380 nm bis 1 mm, zumindest einer Beleuchtungseinheit zur Beleuchtung zumindest eines Abschnittes der Oberfläche des Bauteils, welche dem Erzeugen schmal- und/ oder breitbandiger elektromagnetischer Strahlung in dem benannten Wellenlängenbereich dient, und zumindest einer Auswerteeinheit geeignet zur Speicherung der von der Aufnahmeeinheit erfassten Daten, zu deren qualitativer und quantitativer Analyse zur Ermittlung der Schädigung der Bauteile sowie zur Aus- und/ oder Weitergabe der Analyseergebnisse.

Durch die Verwendung einer digitalen Aufnahmeeinheit ist es möglich das erfindungsgemäße Verfahren zumindest halbautomatisiert durchzuführen, da die in der Auswerteeinheit benötigten Daten in der Art vorliegen, dass sie für die Auswertung direkt verwendet werden können. In einer Ausführungsform der Erfindung kann so aus einer breitbandigen Aufnahme, unter Verwendung von Referenzdaten, ein schmalbandiger Frequenzbereich eines der betrachteten Schichtmaterialien extrahiert werden und beispielsweise in direkter Abfolge mit Methoden der Mustererkennung ausgewertet werden, so dass einzelne Bereiche dieser Aufnahme, in Form von hellen oder dunklen Bereichen einer schwarz-weiß Aufnahme, markiert werden und zur weiteren Begutachtung bereits hervorgehoben, zur Verfügung stehen.

Die Verwendung einer digitalen Aufnahmeeinheit macht es ebenfalls möglich die Frequenzbereiche der Beleuchtungs- und der Aufnahmeeinheit, z.B. durch geeignete Steuerung der Beleuchtungs- und der Aufnahmeeinheit durch die Auswerteeinheit, aufeinander abzustimmen.

Eine Anpassung der Aufnahmeeinheit insbesondere an die Gestalt des Bauteils und die verwendeten Wellenlängenbereiche kann für zumindest einen Bildsensor, der sich z.B. in einem kameraähnlichen Gehäuse befindet, mittels einer oder mehrerer Linsen und/oder Filter erfolgen. Diese Linsen und Filter können auf den erwarteten Frequenzbereich des Absorptionsspektrums der Schichtmaterialen eingestellt werden, spezielle Filter können jedoch auch für eine weitere Einschränkung dieses Frequenzbereiches genutzt werden. Mit den Linsen ist es wiederum möglich eine Art Vergrößerungsfunktion, bekannt als Zoom, zu realisieren, so dass Details von Bauteilen der Windkraftanlage einer näheren Analyse unterzogen werden können.

Sofern in einer Ausgestaltung des erfindungsgemäßen Verfahrens Referenzdaten erforderlich sind, kann auch deren Speicherung in der Auswerteeinheit erfolgen. Alternativ oder ergänzend können auch externe Speicherorte über Datenfernübertragung einbezogen werden.

Eine Visualisierung der gemessenen und der abgelegten Daten, wird ebenfalls über die Auswerteeinheit oder auch über einen Backupserver realisiert, auf den ein dazu berechtigter Nutzer über einen Web-Browser Zugang haben kann.

Eine Aufnahmeeinheit zum Erfassen der elektromagnetischen Strahlung weist mindestens einen zumindest zweidimensional ausgebildeten Bildsensor auf, wobei Bildsensoren so ausgeführt sein können, dass deren Pixel für verschiedene Frequenzbereiche elektromagnetischer Strahlung empfindlich sind.

Die von den ggf. unterschiedlichen Bildsensoren erfassbare Frequenzbereiche umfassen dabei entweder die Wellenlängen des Bereich des sichtbaren Lichtes (380 nm bis 780 nm Wellenlänge) insbesondere für die Fluoreszenzmethode oder insbesondere für die IR-Absorptionsmethode den nahen und fernen infraroten Bereich (780 mm bis 1 mm Wellenlänge).

So kann in einer Ausführungsform der Erfindung mit zumindest einer Aufnahmeeinheit die von einer breitbandig beleuchteten Windkraftanlage reflektierte elektromagnetische Strahlung so erfasst werden, dass dadurch der gesamte breitbandig beleuchtete Bereich, mittels einer Vielzahl zeitgleich erfasster schmalbandiger Aufnahmen, möglich ist.

Die Aufnahme-, Beleuchtungs- und Auswerteeinheit können sowohl als stationäre oder auch als tragbare, mobile Einheiten ausgeführt sein, wobei diese mobilen Einheiten sich beispielsweise auf Land-, Wasser- oder an Luftzeugen befinden können. Des Weiteren ist es möglich die Aufnahme-, Beleuchtungs- und Auswerteeinheit in einer übergeordneten Vorrichtung gemeinsam zu transportieren und zum Zwecke der Überwachung zumindest einer Windkraftanalage zu nutzen. Damit können die unterschiedlichsten Bauteile in den verschiedenen Verwendungen untersucht werden, insbesondere auch während des Betriebes. Dies ist z.B. für die Überwachung von Windkraftanlagen von Vorteil.

Die Beleuchtungseinrichtung umfasst zur Erzeugung breitbandiger elektromagnetischer Strahlung Komponenten zur Erzeugung schmalbandiger elektromagnetischer Strahlung. Auf diese Weise können die schmalbandigen Komponenten der Beleuchtungseinheit so kombiniert werden, dass sie in ihrer Gesamtheit breitbandige elektromagnetische Strahlung erzeugen. Sollen schmalbandige Aufnahmen der Windkraftanlage erfasst werden so können die Komponenten zur Erzeugung schmaldbandiger elektromagnetischer Strahlung in ihrem Frequenzbereich synchronisiert werden, wobei die Aufnahmeeinrichtung ebenfalls auf diesen schmalbandigen Frequenzbereich synchronisiert werden kann.

Die Erfindung soll nachfolgend lediglich beispielhaft, nicht jedoch beschränkend anhand der Überwachung einer Windkraftanlage mit drei Rotorblättern erläutert werden.

Die zugehörigen Zeichnungen zeigen in
- Fig. 1A: die schematische Gesamtansicht einer Windkraftanlage,
- Fig. 1B: einen Querschnitt eines Rotorblattes,
- Fig. 2: die Darstellung eines Rotorblattes in Ruhe-/Fahnenstellung (phi = 0°) in der Aufnahmephase der Druckseite sowie Beleuchtungs- und Erfassungseinheit am Boden,
- Fig. 3: die Darstellung eines Rotorblattes in Ruhe-/Fahnenstellung (phi = 0°) in der Aufnahmephase der Saugseite sowie Beleuchtungs- und Erfassungseinheit am Boden,
- Fig. 4: die Darstellung eines Rotorblattes in vollgepitchter Stellung (phi = 90°) in angebremstem Modus in der Aufnahmephase der Rotorblattnase / Anströmkante sowie Beleuchtungs- und Erfassungseinheit am Boden,
- Fig. 5: beispielhafte Absorptionsspektren der Schichtmaterialien nach deren Erfassung und
- Fig. 6: einen schematischen Blockschaltplan des erfindungsgemäßen Verfahrens.

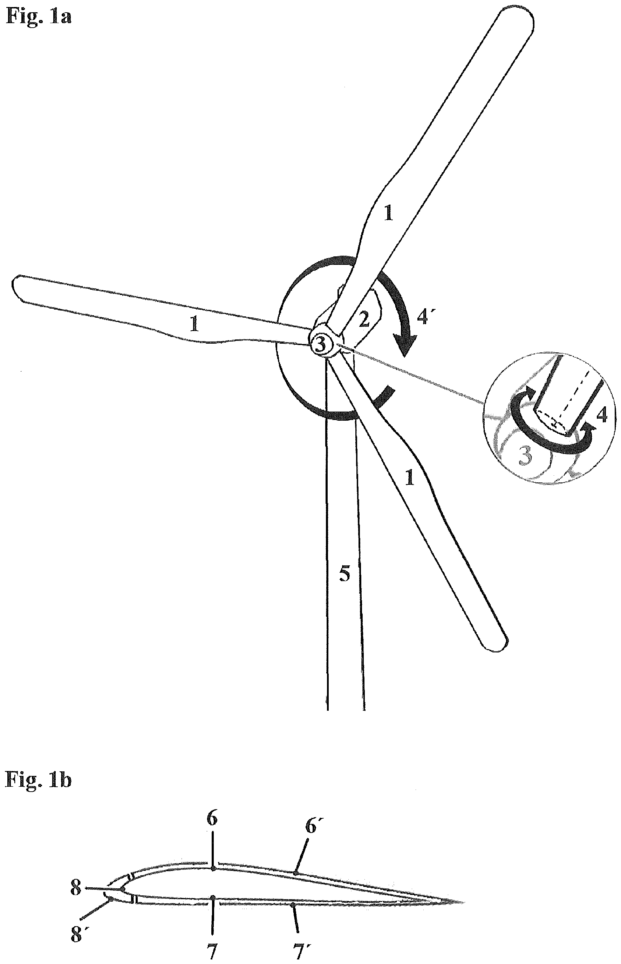

In Fig. 1A ist die Gesamtansicht einer Windkraftanlage mit drei Rotorblättern 1 dargestellt, welche an einer Nabe 3 befestigt sind, wobei die Rotorblätter 1 um den Pitchwinkel phi 4 einstellbar sind. Die Nabe 3 wiederum geht in eine horizontal gelagerte Welle (nicht dargestellt) über, die sich mit Drehwinkel omega (4') dreht. Die Welle endet in einer Gondel 2, welche die nicht näher dargestellte Maschinentechnik umfasst und am oberen Ende eines Turmes 5 drehbar um eine vertikale Achse angeordnet ist. Die Topologie des Rotorblattes 1, welche in Fig. 1B dargestellt ist, kann in die Bereiche Rotorblatt-Saugseite 6, Rotorblatt-Druckseite 7 und die Anströmkante des Rotorblattes 8 eingeteilt werden. Die Oberflächen zu den Bereichen sind entsprechend mit 6', 7' und 8'bezeichnet.

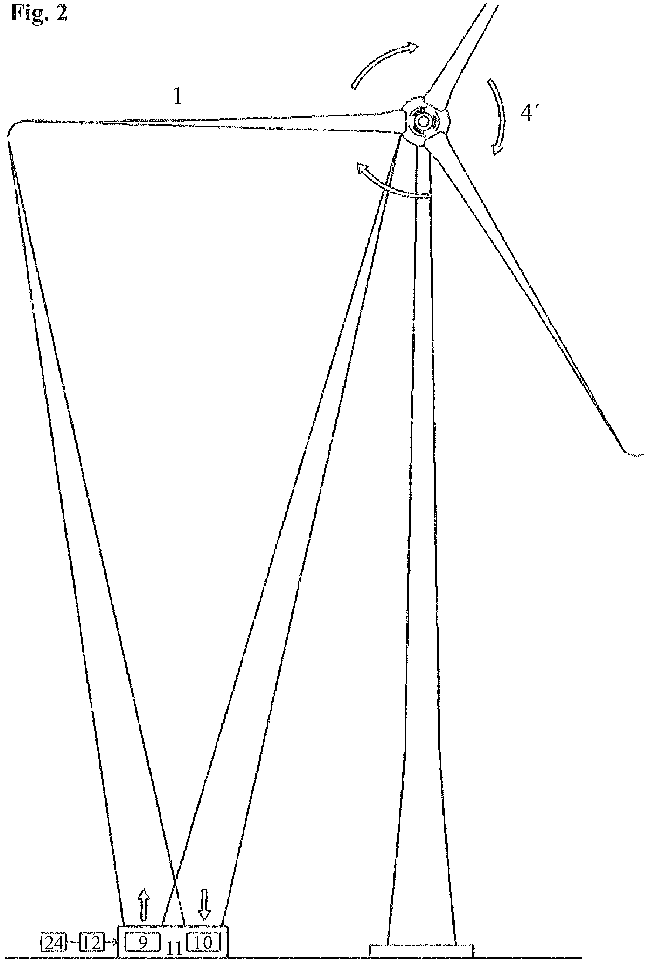

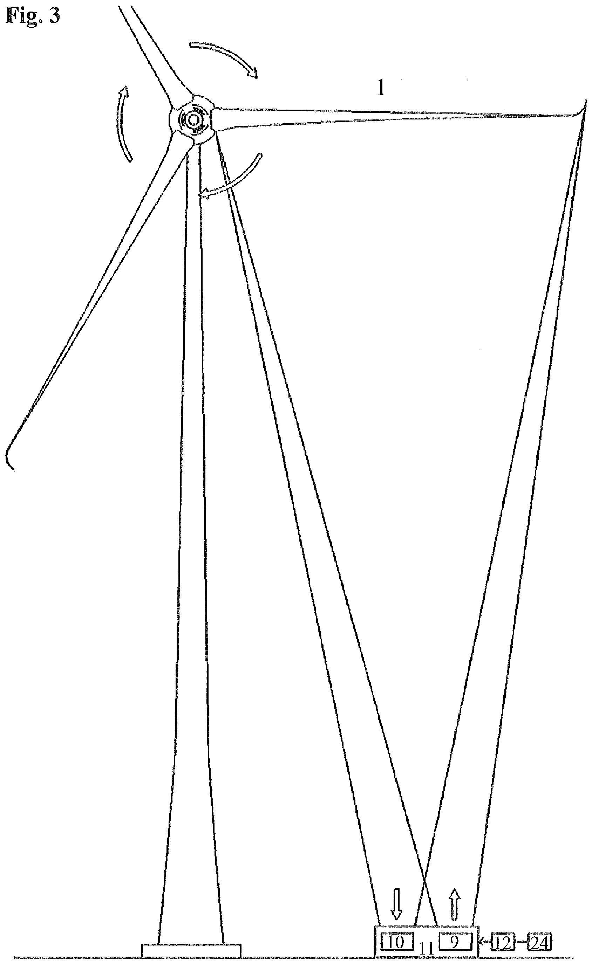

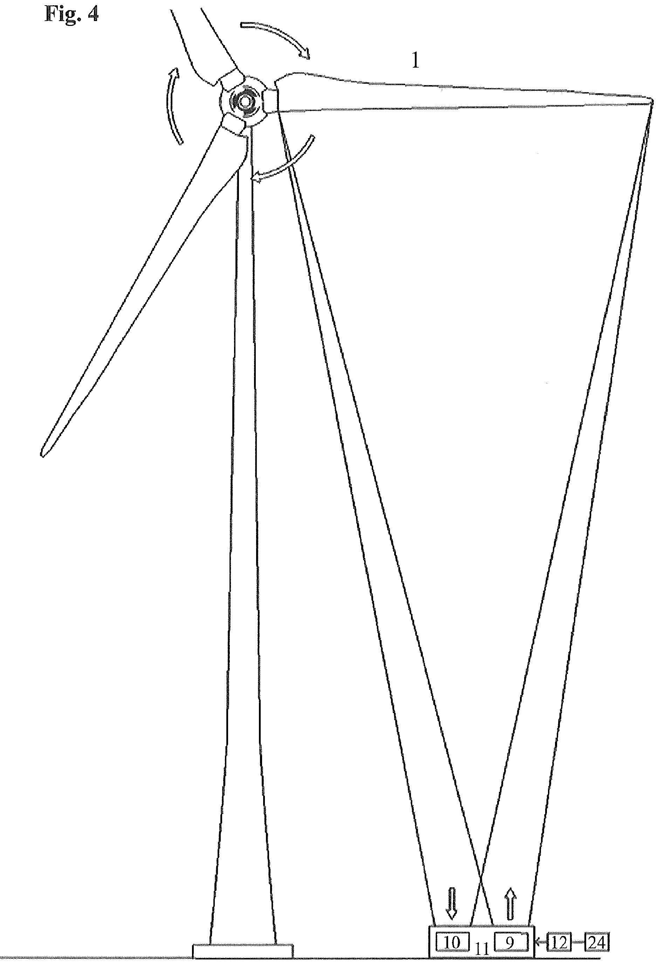

Fig. 2 bis Fig. 4 zeigen gemeinsam dieselbe Windkraftanlage wie sie in Fig. 1 abgebildet ist, lediglich in jeweils einer anderen Ansicht der Rotorblattstellungen. Das Aufnahme-Beleuchtungs-System 11 mit der Sendeeinheit 9 und der Empfangseinheit 10 ist dabei an geeigneten Beleuchtungs- und Aufnahmeorten 11a, 11b und 11c am Boden platziert. Von diesen Orten aus wird das Rotorblatt 1 mit einer geeigneten elektromagnetischen Strahlung flächenhaft beleuchtet und die Rückstrahlung fotografisch von einer Aufnahmeeinheit 10 registriert.

Die Beleuchtung und Aufnahme der Rotorblattflächen 6',7', und 8' ist sowohl mit nur einer Beleuchtungseinheit 9 und einer Aufnahmeeinheit 10 oder auch mit mehreren Beleuchtungseinheiten 9 und mehreren Aufnahmeeinheiten 10 möglich. Bei der Verwendung nur einer Beleuchtungseinheit 9 und einer Aufnahmeeinheit 10 werden Aufnahme und Beleuchtung der Rotorblattflächen 6', 7' und 8' gleichzeitig an verschiedenen Aufnahmeorten durchgeführt.

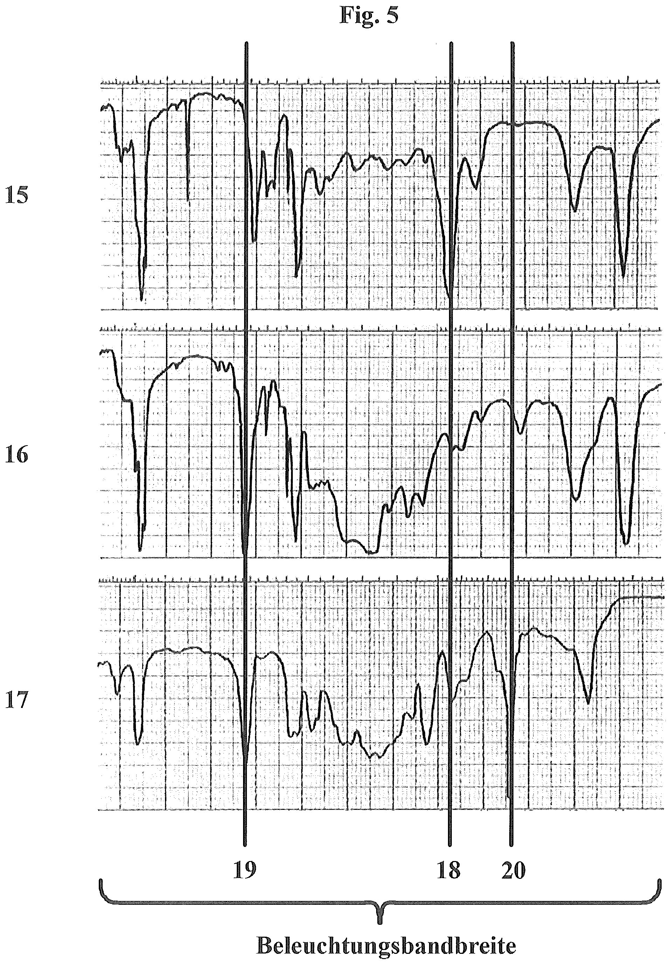

Fig. 5 zeigt ein Absorptionsspektrum des Lacks 15, ein Absorptionsspektrum des Gelcoat 16 sowie ein Absorptionsspektrum des Grundkörpers 17 des Rotorblattes 1, wie sie typischerweise nach einer Aufnahme mit einer breitbandigen Beleuchtung des Rotorblattes 1 entstehen. Dabei sind die Intensität der reflektierten elektromagnetischen Strahlung auf der Ordinate und die Frequenz der elektromagnetischen Strahlung auf der Abszisse aufgetragen, wobei die abgebildeten Absorptionsspektren beispielhaft für unterschiedliche Positionen des Rotorblattes sind. Hervorgehoben durch vertikale Linien innerhalb der dargestellten Absorptionsspektren ist die Absorptionslinie des Lacks 18, die Absorptionslinie des Gelcoat 19 sowie die Absorptionslinie des Grundkörpers 20, wobei zu erkennen ist, dass diese Minimalwerte bei unterschiedlichen Frequenzen des breitbandigen Aufnahme zu finden sind und somit zur Differenzierung der Schädigung hinsichtlich der Schicht der Oberfläche des Rotorblattes 1 herangezogen werden können.

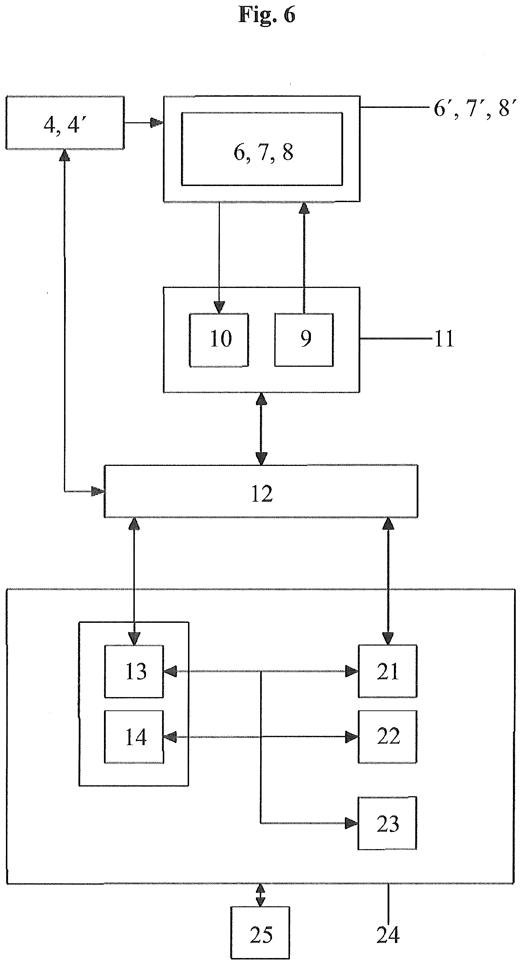

Eine Ausgestaltung der erfindungsgemäße Vorrichtung, die für die Durchführung des erfindungsgemäßen Verfahrens angewendet wird, die teilweise schon in den Erläuterungen zu den Fig. 2 bis Fig. 4 in ihren Funktionen erläutert wurde, ist beispielhaft in der Fig. 6 in Form eines schematischen Blockschaltplan dargestellt.

Dabei bilden eine Beleuchtungseinheit 9 und eine Aufnahmeeinheit 10 ein funktionelles Paar, das Aufnahme-Beleuchtungs-System 11, zur Beleuchtung und Aufnahme von Rotorblatt-Oberflächen (6', 7' und 8').

Das Rotorblatt 1 wird vollständig oder zumindest abschnittsweise derart durch die Beleuchtungseinrichtung 9 beleuchtet, dass deren von der betreffenden Oberfläche vom Rotorblatt 1 reflektierte elektromagnetische Strahlung von der der Aufnahmeeinheit 10 erfasst werden kann. Die Synchronisation des Zeitpunktes der Aufnahme sowie der verwendete schmal- oder breitbandige Frequenzbereich der Beleuchtungseinheit 9 und der Aufnahmeeinheit 10 wird in dieser Ausführungsform der Erfindung von der Steuer-Kommunikations-System 12 gesteuert, welches mit der Auswerteinheit 24 verbunden ist. Das Steuer-Kommunikations-System 12 überträgt Daten zur weiteren Verarbeitung von der Beleuchtungseinrichtung 9 und der Aufnahmeeinrichtung 10 auf eine Auswerteeinheit 24.

Die vom Steuer-Kommunikations-System 12 an die Auswerteeinheit 24 übertragenen Daten des Analyseprozesses (Steuer- und Bilddaten) werden für die weitere Verarbeitung in der Analyseeinheit 22, für den Zugriff durch die Bedieneinheit 13 sowie die Ergebnisanzeigeeinheit 14 in der Datenspeichereinheit 21 originär abgelegt. Die Analyseeinheit 22 greift auf die Referenzdatenbank-Einheit 23 zu.

Die erfassten Daten, die Analyseergebnisse, die ggf. weiter entwickelten Referenzdaten, aber auch andere Daten können mit Hilfe eines Backup-Servers 25 so zur Verfügung gestellt werden, dass die erwähnten Daten auf dem Backup-Server 25 verbleiben und mittels Datenfernübertragung auf einem anderen nicht dargestellten System, vorteilhafter Weise unter Nutzung eines Webbrowsers, visualisierbar sind oder dass die erwähnten Daten zunächst ohne Visualisierung auf ein anderes nicht dargestelltes System mittels Datenfernübertragung übertragen werden.

### Bezugszeichenliste

- 1: Rotorblatt
- 2: Gondel
- 3: Nabe
- 4: Pitchwinkel phi des Rotorblattes
- 4': Rotordrehwinkel omega
- 5: Turm der Windkraftanlage
- 6: Rotorblattkörper-Saugseite
- 7: Rotorblattkörper-Druckseite
- 8: Anströmkante des Rotorblattkörpers
- 6': Oberfläche Rotorblatt-Saugseite
- 7': Oberfläche Rotorblatt-Druckseite
- 8': Oberfläche Anströmkante des Rotorblattes
- 9: Beleuchtungseinheit
- 10: Aufnahmeeinheit
- 11: Aufnahme-Beleuchtungs-System
- 12: Steuerungs-Kommunikations-System
- 13: Bedieneinheit
- 14: Ergebnisanzeigeeinheit
- 15: Absorptionsspektrum des Lacks
- 16: Absorptionsspektrum des Gelcoat
- 17: Absorptionsspektrum des Grundkörpers
- 18: Absorptionslinie des Lacks
- 19: Absorptionslinie des Gelcoat
- 20: Absorptionslinie des Grundkörpers
- 21: Datenspeichereinheit
- 22: Analyseeinheit
- 23: Referenzdatenbank-Einheit
- 24: Auswerteeinheit
- 25: Backup-Server

## Patentansprüche

1. Verfahren zur Überwachung des Oberflächenzustandes von Bauteilen, deren Oberfläche eine oder mehrere übereinander liegende Schichten umfasst, umfassend folgende Verfahrensschritte,
- zumindest abschnittsweises, breit- oder schmalbandiges Beleuchten der Oberfläche zumindest eines Bauteils durch elektromagnetische Strahlung im sichtbaren und/oder im Infrarot-Bereich mit einer Beleuchtungseinheit (9) erfolgt,
- der von dem Bauteil reflektierten elektromagnetischen Strahlung im sichtbaren und/oder im Infrarot-Bereich mit einer Aufnahmeeinheit (10) erfasst wird sowie
- eine frequenzselektive Auswertung der erfassten Aufnahme mit einer Auswerteeinheit (24) erfolgt, so dass anhand des frequenzabhängigen stoffspezifischen Absorptionsverhaltens (15, 16, 17) oder Fluoreszenzverhaltens zumindest einer Schicht der Oberfläche eines Bauteils eine Schädigung, Alterung und/oder Dickenverteilung dieser ermittelbar ist, **dadurch gekennzeichnet, dass** entweder das erfasste Absorptions- oder Fluoreszenzverhalten mit stoffspezifischen Referenz-Absorptionsspektren oder Referenz-Fluoreszenzspektren (23) der Schichtmaterialien der Oberfläche verglichen wird, um die Quelle der Schädigung hinsichtlich Position und/ oder Schicht der Oberfläche zu bestimmen oder, ein Frequenzscan in einem vordefinierten schmal- oder breitbandigen Frequenzbereich durchgeführt und ein erfasstes Absorptionsverhalten oder Fluoreszenzverhalten hinsichtlich darin enthaltener stoffspezifischer Referenz-Absorptionsspektren oder Referenz-Fluoreszenzspektren ausgewertet werden, um die Quelle der Schädigung hinsichtlich Position und/ oder Schicht der Oberfläche zu bestimmen.

2. Verfahren zur Überwachung des Oberflächenzustandes von Bauteilen nach Anspruch 1, wobei die absolute oder die relative Dickenverteilung einer Schicht einer Oberfläche mittels der Intensitätsverteilung des erfassten Absorptionsverhaltens und/oder Fluoreszenzverhaltens bestimmt wird.

3. Verfahren zur Überwachung des Oberflächenzustandes von Bauteilen nach einem der vorbenannten Ansprüche, wobei der Vergleich des erfassten Absorptionsverhaltens und/oder Fluoreszenzverhaltens mit stoffspezifischen Referenz-Absorptionsspektren und/oder Referenz-Fluoreszenzspektren (23) unter Berücksichtigung der Alterung der Schichtmaterialen der Oberfläche erfolgt.

4. Verfahren zur Überwachung des Oberflächenzustandes von Bauteilen nach einem der vorbenannten Ansprüche, wobei die Beleuchtung durch die Beleuchtungseinheit (9) derart erfolgt, dass der Einfluss einer Fremdbelichtung auf das Absorptionsverhalten und/oder Fluoreszenzverhalten ausgeschlossen oder minimiert wird.

5. Verfahren zur Überwachung des Oberflächenzustandes von Bauteilen nach einem der vorbenannten Ansprüche, wobei die Überwachung an einer Windkraftanlage erfolgt und für eine Erfassung der Druck- (7), der Saugseite (6) sowie der Anströmkante (8) während des Betriebes der Windkraftanlage der Pitchwinkel phi (4) eines Rotorblattes (1) derart eingestellt wird, dass die benannten Bereiche des Rotorblattes (1) gleichzeitig beleuchtet und/oder aufgenommen werden können.

6. Vorrichtung zur Überwachung des Oberflächenzustandes von Bauteilen, deren Oberfläche eine oder mehrere übereinander liegende Schichten umfasst, umfassend folgende Komponenten,
- zumindest eine Aufnahmeeinheit (10) zum Erfassen elektromagnetischer Strahlung im sichtbaren und/oder im Infrarot-Bereich,
- zumindest eine Beleuchtungseinheit (9) zur Beleuchtung zumindest eines Abschnittes der Oberfläche des Bauteils, welche schmal- und/ oder breitbandige elektromagnetische Strahlung im sichtbaren und/oder im Infrarot-Bereich aussendet, und
- zumindest eine Auswerteeinheit (24) geeignet zur Speicherung der von der Aufnahmeeinheit (10) erfassten Daten zu deren qualitativer und quantitativer Analyse zur Ermittlung der Schädigung der Bauteile und zur Ausgabe der Analyseergebnisse, **dadurch gekennzeichnet, dass** die Auswerteeinheit (24) derart ausgerichtet ist, das Verfahren einer der Ansprüche 1-5 auszuführen.

7. Vorrichtung zur Überwachung des Oberflächenzustandes von Bauteilen nach Anspruch 6, wobei die Aufnahmeeinheit (10) Bildsensoren mit verschiedenfrequenzempfindlichen Pixeln aufweist.

8. Vorrichtung zur Überwachung des Oberflächenzustandes von Bauteilen nach einem der Ansprüche 6 oder 7, wobei die Aufnahmeeinheit (10), die Beleuchtungseinheit (9) und die Auswerteeinheit (24) als mobile, tragbare Einheiten oder stationäre Einheiten ausgeführt sind.

9. Vorrichtung zur Überwachung des Oberflächenzustandes von Bauteilen nach einem der Ansprüche 6 bis 8, wobei die Beleuchtungseinheit (9) zur Erzeugung breitbandiger elektromagnetischer Strahlung Komponenten zur Erzeugung schmalbandiger elektromagnetischer Strahlung umfasst.

10. Vorrichtung zur Überwachung des Oberflächenzustandes von Bauteilen nach einem der Ansprüche 6 bis 9, wobei wenigstens ein mobiles Scannsystem vorgesehen und dieses so ausgeführt ist, dass es die Oberfläche der Bauteile zum Zwecke einer Schichtdickenmessung mit dem optischen System abscannt, zugleich einen konstanten Abstand des optischen Systems zu dem Bauteil sichert und die Aufnahme von Messwerten stets in Richtung der jeweiligen Flächennormale des Bauteils erfolgt.

11. Verwendung einer Vorrichtung zur Überwachung des Oberflächenzustandes von Bauteilen nach einem der Ansprüche 6 bis 10, wobei eine absolute Messung der Schichtdicke an Rotorblättern oder Bauteilen, deren Oberfläche eine oder mehrere übereinander liegende Schichten umfasst, unmittelbar nach der Fertigung erfolgt,

## Claims

1. A method for monitoring the surface state of structural parts which have a surface that comprises one or more stacked layers, said method comprising the steps of:
- illuminating at least portions of the surface of at least one structural part in a broadband or narrowband manner by means of electromagnetic radiation in the visible and/or infrared range using an illuminating unit (9),
- detecting the electromagnetic radiation in the visible and/or infrared range reflected from the structural part using a capturing unit (10), and
- evaluating the obtained detection in a frequency-selective manner using an evaluating unit (24), so that a damage, aging and/or thickness distribution of at least one structural part surface layer can be ascertained based on the frequency-dependent, substance-specific absorption behavior (15, 16, 17) or fluorescence behavior of said at least one structural part surface layer,
**characterized by** either comparing the detected absorption or fluorescence behavior to substance-specific reference absorption spectrums or reference fluorescence spectrums (23) of the surface layer materials to determine the source of the damage with regard to surface position and/or layer, or performing a frequency scan in a predefined narrowband or broadband frequency range and evaluating a detected absorption behavior or fluorescence behavior with regard to contained substance-specific reference absorption spectrums or reference fluorescence spectrums to determine the source of the damage with regard to surface position and/or layer.

2. The method for monitoring the surface state of structural parts according to claim 1, wherein the absolute or relative thickness distribution of a surface layer is determined by means of the intensity distribution of the detected absorption behavior and/or fluorescence behavior.

3. The method for monitoring the surface state of structural parts according to any one of the preceding claims, wherein the detected absorption behavior and/or fluorescence behavior is compared to substance-specific reference absorption spectrums and/or reference fluorescence spectrums (23) taking into account the aging of the surface layer materials.

4. The method for monitoring the surface state of structural parts according to any one of the preceding claims, wherein the illumination using the illuminating unit (9) is performed such that the influence of foreign illumination on the absorption behavior and/or fluorescence behavior is excluded or minimized.

5. The method for monitoring the surface state of structural parts according to any one of the preceding claims, wherein said monitoring is performed on a wind turbine, and for detecting the pressure side (7), the suction side (6) and the leading edge (8) during operation of said wind turbine, the pitch angle phi (4) of a rotor blade (1) is adjusted such that the said regions of the rotor blade (1) can be illuminated and/or captured simultaneously.

6. A device for monitoring the surface state of structural parts which have a surface that comprises one or more stacked layers, said device comprising the following components:
- at least one capturing unit (10) for detecting electromagnetic radiation in the visible and/or infrared range,
- at least one illuminating unit (9) for illumination of at least one portion of the structural part surface, which emits narrowband and/or broadband electromagnetic radiation in the visible and/or infrared range, and
- at least one evaluating unit (24) which is adapted for storing the data obtained by the capturing unit (10) for a qualitative and quantitative analysis thereof, for ascertaining the damage to the structural parts, and for outputting the analysis results, **characterized in that** the evaluating unit (24) is arranged so as to perform the method according to any one of claims 1 to 5.

7. The device for monitoring the surface state of structural parts according to claim 6, wherein the capturing unit (10) includes image sensors with pixels sensitive to different frequencies.

8. The device for monitoring the surface state of structural parts according to any one of claims 6 or 7, wherein the capturing unit (10), the illuminating unit (9), and the evaluating unit (24) are configured as mobile portable units or stationary units.

9. The device for monitoring the surface state of structural parts according to any one of claims 6 to 8, wherein for generating broadband electromagnetic radiation, the illuminating unit (9) comprises components for generating narrowband electromagnetic radiation.

10. The device for monitoring the surface state of structural parts according to any one of claims 6 to 9, wherein at least one mobile scanning system is provided which is configured such that it scans the structural part surface for the purpose of measuring layer thickness using the optical system while ensuring a constant distance of the optical system from the structural part, and measurement values are always obtained in the direction of the respective surface normal of the structural part.

11. Use of a device for monitoring the surface state of structural parts according to any one of claims 6 to 10, wherein an absolute measurement of the layer thickness on rotor blades or structural parts having a surface comprising one or more stacked layers is performed immediately after fabrication.

## Revendications

1. Procédé de surveillance de l'état superficiel de composants dont la surface comprend une ou plusieurs couches superposées, comprenant les étapes de procédé suivantes :
- éclairage à large bande ou bande étroite, au moins par sections, de la surface d'au moins un composant par rayonnement électromagnétique dans le domaine visible et/ou infrarouge avec un module d'éclairage (9),
- le rayonnement électromagnétique reflété par le composant dans le domaine visible et/ou infrarouge est détecté avec un module de captage (10) ainsi que
- une évaluation sélective en fréquence du captage détecté avec un module d'évaluation (24) de sorte qu'un endommagement, vieillissement et/ou une répartition d'épaisseurs d'au moins une couche de la surface d'un composant peut être déterminé(e) à l'aide du comportement d'absorption (15, 16, 17) ou comportement de fluorescence spécifique à une substance, dépendant de la fréquence, de celle-ci,
**caractérisé en ce que** le comportement d'absorption ou de fluorescence détecté est comparé à des spectres d'absorption de référence ou spectres de fluorescence de référence (23) spécifiques à une substance des matériaux de couche de la surface pour déterminer la source de l'endommagement en ce qui concerne la position et/ou couche de la surface, ou un balayage de fréquences est réalisé dans une gamme de fréquences à bande étroite ou large bande prédéfinie et un comportement d'absorption ou comportement de fluorescence détecté est évalué en ce qui concerne des spectres d'absorption de référence ou spectres de fluorescence de référence spécifiques à une substance, contenus en son sein pour déterminer la source de l'endommagement en ce qui concerne la position et/ou couche de la surface.

2. Procédé de surveillance de l'état superficiel de composants selon la revendication 1, dans lequel la répartition d'épaisseurs absolue ou relative d'une couche d'une surface est déterminée au moyen de la répartition d'intensités du comportement d'absorption et/ou comportement de fluorescence détecté.

3. Procédé de surveillance de l'état superficiel de composants selon une des revendications précédentes, dans lequel la comparaison du comportement d'absorption et/ou comportement de fluorescence détecté à des spectres d'absorption de référence et/ou spectres de fluorescence de référence (23) spécifiques à une substance s'effectue en tenant compte du vieillissement des matériaux de couche de la surface.

4. Procédé de surveillance de l'état superficiel de composants selon une des revendications précédentes, dans lequel l'éclairage par le module d'éclairage (9) s'effectue de telle sorte que l'influence d'une exposition extérieure sur le comportement d'absorption et/ou comportement de fluorescence est exclue ou minimisée.

5. Procédé de surveillance de l'état superficiel de composants selon une des revendications précédentes, dans lequel la surveillance s'effectue sur une éolienne et l'angle de calage phi (4) d'une pale de rotor (1) est réglé pour une détection du côté de pression (7), du côté d'aspiration (6) ainsi que du bord d'attaque (8) pendant le fonctionnement de l'éolienne de telle sorte que les régions citées de la pale de rotor (1) peuvent être éclairées et/ou captées simultanément.

6. Dispositif de surveillance de l'état superficiel de composants dont la surface comprend une ou plusieurs couches superposées, comprenant les composants suivants :
- au moins un module de captage (10) pour la détection de rayonnement électromagnétique dans le domaine visible et/ou infrarouge,
- au moins un module d'éclairage (9) pour l'éclairage d'au moins une section de la surface du composant qui émet un rayonnement électromagnétique à bande étroite et/ou large bande dans le domaine visible et/ou infrarouge, et
- au moins un module d'évaluation (24) convenant à la mémorisation des données détectées par le module de captage (10) pour leur analyse qualitative et quantitative en vue de la détermination de l'endommagement des composants et en vue de l'émission des résultats d'analyse, **caractérisé en ce que** le module d'évaluation (24) est configuré de manière à réaliser le procédé d'une des revendications 1 à 5.

7. Dispositif de surveillance de l'état superficiel de composants selon la revendication 6, dans lequel le module de captage (10) présente des capteurs d'image avec différents pixels sensibles à la fréquence.

8. Dispositif de surveillance de l'état superficiel de composants selon une des revendications 6 ou 7, dans lequel le module de captage (10), le module d'éclairage (9) et le module d'évaluation (24) sont réalisés en tant que modules mobiles portables ou modules stationnaires.

9. Dispositif de surveillance de l'état superficiel de composants selon une des revendications 6 à 8, dans lequel le module d'éclairage (9) pour la génération de rayonnement électromagnétique à large bande comprend des composants pour la génération de rayonnement électromagnétique à bande étroite.

10. Dispositif de surveillance de l'état superficiel de composants selon une des revendications 6 à 9, dans lequel au moins un système de balayage mobile est prévu et celui-ci est réalisé de sorte qu'il balaie avec le système optique la surface des composants dans le but d'une mesure d'épaisseur de couche, sécurise en même temps un écart constant du système optique par rapport au composant et effectue le captage de valeurs de mesure toujours en direction de la normale superficielle respective du composant.

11. Utilisation d'un dispositif de surveillance de l'état superficiel de composants selon une des revendications 6 à 10, dans laquelle une mesure absolue de l'épaisseur de couche sur des pales de rotor ou composants dont la surface comprend une ou plusieurs couches superposées s'effectue directement après la fabrication.
